# DEMANDE DE BREVET EUROPEEN

(11) **EP 2 014 913 A2**
(43) Date de publication de la demande: **14.01.2009**
(21) Numéro de dépôt: 08368014.0
(22) Date de dépôt: 03.07.2008
(51) Int. Cl.: F03D 3/00, F03D 3/04

(54) **Système de récupération, canalisation et exploitation des courants d'air naturels ou ceux créés par le déplacement d'une unité de transports en vue de leur transformation en une énergie électrique**

(30) Priorité: 05.07.2007 FR 0704854
(71) Demandeur: Clemente, Marc, 06210 Mandelieu-La Napoule (FR)
(72) Inventeur: Clemente, Marc, 06210 Mandelieu-La Napoule (FR)

(57) **Abrégé**

Dispositif pour exploiter les courants d'air créées par le déplacement d'une unité de transports ou ceux présents naturellement par des dépressions atmosphériques classiques.

L'invention concerne un boitier (5) compact réalisé par deux panneaux entre lesquels sont compris quatre paroies (3) qui composent les bouches de récupération (1) et de sortie (11) des courants et leur système de canalisation (2) et de centralisation (4), fixées de façon à créer un rétrécissement qui augmente leur force et leur vitesse qui met en mouvement le rotor (12) monté sur son axe (6) au centre du boitier (5) qui est récupéré soit directement lorsque ledit axe (6) est la génératrice de courant électrique (10) elle-même, soit indirectement par une poulie (7) qui transmet le mouvement par l'intermédiaire d'une courroie (8) à une seconde poulie (9) équipant l'axe (13) de la génératrice (10) fixée en périphèrie immédiat.

Le dispositif selon l'invention est destiné à la production d'électricité "embarquée" par un procédé écologique, amovibilité et d'un transport aisé.

## Description

La présente invention concerne un dispositif pour exploiter les forces naturelles (courant d'air), - soit celles créées par le déplacement d'une unité de transports terrestre ou nautique (C.x, résistance à la pénétration dans l'air) - soit celles existantes naturellement en raison de phénomènes et dépressions atmosphériques classiques (vents, lorsque l'unité est immobilisée), aux fins de les transformer en une énergie électrique et de procurer ainsi une plus grande réserve d'électricité aux unités de transports munies d'appareillage électrique conséquent et demandant pour leur utilisation, une grande capacité d'électricité "embarquée". Ces forces ont de plus l'avantage de permettre la production d'une énergie propre, d'être disponible à volonté et d'être absolument gratuite.

Au jour d'aujourd'hui, pour alimenter en électricité des unités de transports terrestres ou nautiques propulsées par un moteur électrique, il est indispensable de prévoir pour cela de lourds et onéreux systèmes de réserve d'électricité (batteries - qui ne procurent cependant qu'une autonomie réduite), voire d'accoupler des systèmes de motorisation relais-rechargement (véhicule hybride - véhicule propulsé par un moteur électrique monté en parallèle avec un moteur thermique classique). Le moteur thermique dans ces cas prend le relais du moteur électrique pour permettre, et le déplacement du véhicule et le chargement en électricité des batteries de réserve. Il est également nécessaire de prévoir un poste fixe d'alimentation en électricité, pour pouvoir se brancher et recharger les batteries de réserve, pour les unités de transports propulsées par un moteur électrique. Cette opération nécessite de plus, l'immobilisation de l'unité de transports pendant un certain laps de temps. De même, pour fournir une certaine réserve "domestique" d'électricité aux unités de transports et de loisirs, soit terrestres à propulsion thermique classique (camping -car) soit nautiques (voiliers), il n'existe comme solution, soit de ne se limiter qu'à la seule énergie électrique fournie par l'appareillage interne de l'engin (alternateur-batterie annexe) et nécessitant pour cela l'usage d'un moteur à explosion traditionnel et polluant, soit de s'équiper d'appareillage divers et limité, sans pour autant supprimer certains désagréments, comme la production de pollution (moteur thermique, appareil alimenté par le gaz), de pollution et de bruits (groupe électrogène) ou d'encombrement (panneaux solaires). Nonobstant que ces appareils sont parfois particulièrement onéreux et toujours assujettis à une certaine réserve ou conditions d'utilisation. Ils existent bien d'autres exemples d'unités de transports nécessitant une réserve d'énergie électrique importante ou demandant une grande consommation "d'électricité embarquée", qui se trouvent confrontées à ce problème d'utilisation et d'autonomie (véhicules frigorifiques, ambulances ou véhicules de secours et d'assistances etc....). La liste n'est non exhaustive.

Le dispositif selon l'invention permet de remédier à cet inconvénient, de façon naturelle et autonome, en utilisant pour se faire les forces naturelles (courants d'air) présentes, suivant que l'unité de transports se déplace - celles créées automatiquement par le déplacement de l'unité - ou est immobilisée - celles existantes en raison de phénomènes et dépressions atmosphériques classiques. Il comporte selon une première caractéristique, un boîtier muni de bouches de récupération des courants d'air sur chacun de ses côtés. La bouche de récupération placée face aux courants et donc sur son passage, absorbe une certaine quantité de molécules. Ces molécules sont alors canalisées avant d'être centralisées vers un rotor, installé au centre du boîtier et monté sur un axe. En traversant le boîtier-rotor, les molécules provoquent par leur force et leur vitesse, la rotation du rotor, puis sont refoulées et rejetées dans leur élément naturel, sans aucune altération ou pollution, par les autres bouches de récupération qui deviennent alors, des orifices de sortie. La rotation du rotor se trouve récupéré par son axe. Sur cet axe est fixée une poulie qui prolonge le mouvement de rotation par l'intermédiaire d'une courroie. Ce mouvement est transmis alors à une seconde poulie, elle-même fixée sur l'axe d'une génératrice de courant électrique. Cette jonction transmet alors en continuité, le mouvement de rotation du rotor et par la même, le mouvement nécessaire au fonctionnement de la génératrice. Le fonctionnement de cette dernière fournit ainsi l'électricité nécessaire pour permettre l'alimentation en électricité de l'unité de transports et ainsi, la recharge de ses batterie de réserve. Par ce dispositif, l'unité de transports propulsée par un moteur électrique procède au rechargement de ses batteries de réserve lorsqu'elle est immobilisée, grâce aux vents existants naturellement dans son entourage. Lors de son utilisation et donc de son déplacement, elle puise en premier lieu et dans ses batteries de réserve, l'énergie qui lui est nécessaire et cette même action procure la force naturelle permettant le fonctionnement de la génératrice et ainsi sa propre production d'énergie. De plus, suivant la puissance de la génératrice et de la consommation de l'appareillage électrique de l'unité de transports, il est possible qu'une fois les batteries de réserve chargées, la quantité l'électricité fournit par ce dispositif permette le fonctionnement en direct des appareils électriques en action.

Selon des modes particuliers de réalisation :
- Le boîtier-rotor doit être installé le plus en avant possible et sur le point le plus haut ou le plus adéquat de l'unité de transports pour permettre un maximum de récupération des courants, aussi bien lorsque l'unité se déplace ou que lorsque celle-ci est à l'arrêt. Il doit avoir des dimensions suffisantes pour récupérer un maximum de molécules d'air, tout en présentant un coefficient de traînée (C.x) moindre.
- Il n'est pas indispensable que le dispositif soit installé de façon fixe et définitive sur l'unité de transports. Il peut être absolument amovible et monté sur un système de portage lui permettant d'être installé sur l'unité de transports de son choix et au gré de ses besoins (voiture, bateau, camping-car, caravane, remorque ect.....)
- Les dimensions du boîtier ainsi que celles de son rotor sont assujetties aux caractéristiques de l'unité de transports (sur lequel est installé ou est prévu d'être installé le dispositif) ainsi qu'à ceux de la génératrice équipant l'unité.
- Le type (synchrone ou asynchrone - excité ou non) et la puissance de la génératrice équipant le dispositif sont eux-mêmes définis en raison des besoins énergétiques de son utilisateur.
- La jonction du mouvement de rotation, du rotor à la génératrice, peut se faire soit par liaison assurée par des courroie et poulies, comme précisé ci-dessus, soit directement, en installant la génératrice sur l'axe du rotor.
- La position de la génératrice dans le dispositif est de même définie par les différentes possibilités dues à son utilisation ou que procure l'unité de transports elle-même. Elle peut être soit sur l'un des côté, soit dessus ou dessous, soit en contact ou plus ou moins éloigné du boîtier-rotor et de son axe.
- La rotation du rotor peut-être soit dans le sens des aiguilles d'une montre, soit dans le sens contraire. Il suffira pour cela de simplement modifier l'orientation des parois des bouches de récupération des courants. Elle sera définie par la génératrice installée sur le dispositif.

Les dessins annexés illustrent l'invention :

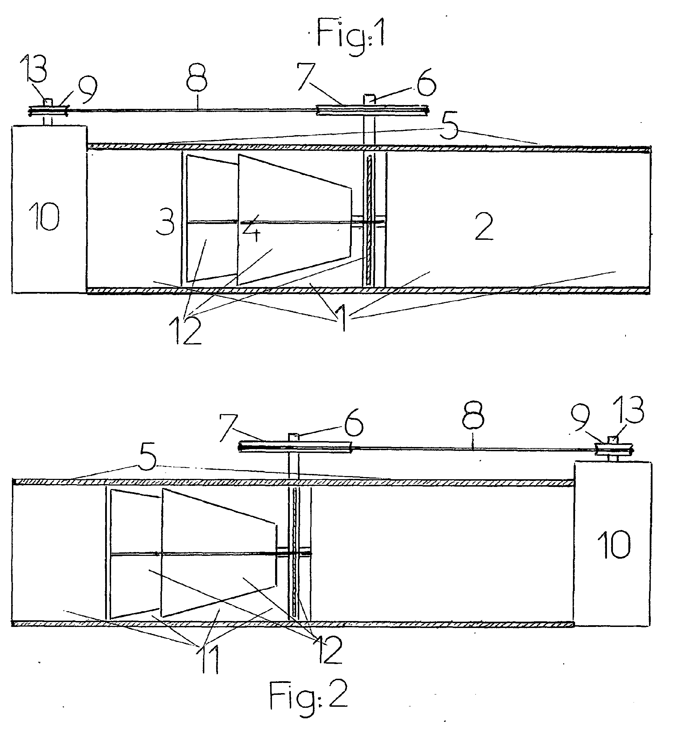

La figure 1 représente en coupe une vue schématisée du côté avant du dispositif de l'invention (face au courants).
La figure 2 représente de dessus une vue schématisée de ce dispositif, du côté arrière, sens de sortie des courants.

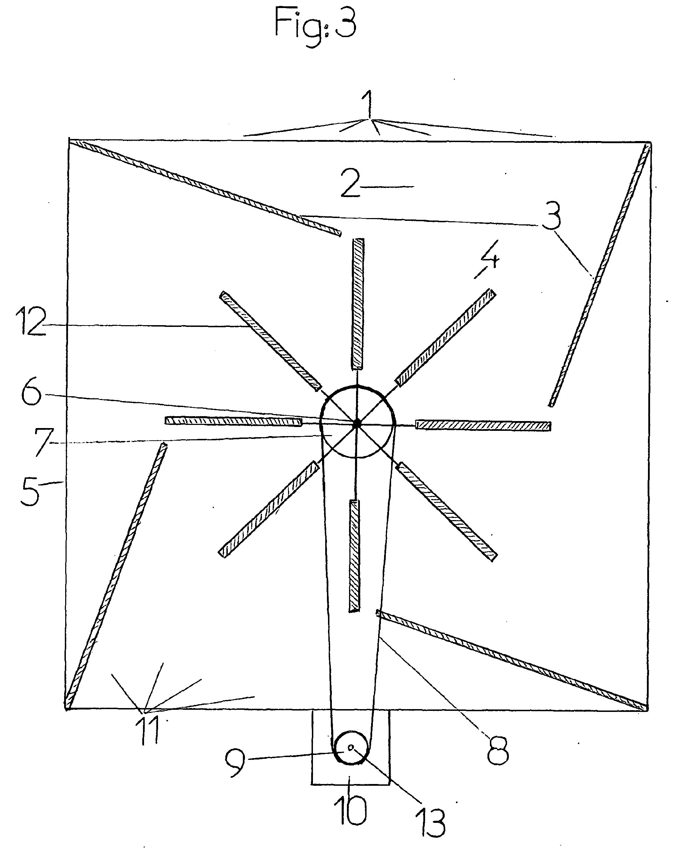

La figure 3 représente une vue schématisée de dessus du dispositif.
La figure 4 représente une variante de ce dispositif vue de dessus.

En référence à ces dessins, le dispositif comporte un boîtier (5) équipé d'une bouche de récupération (1) des courants d'air sur chacun de ses côtés. Lorsque l'une de ces bouches se trouve face au courant d'air et donc sur son passage, elle absorbe une certaine quantité de molécules d'air. Ces molécules sont alors canalisées (2) puis centralisées (3) vers le centre (4) du boîtier (5) (dans lequel est installé un rotor (12)) qu'elles traversent pour ressortir par les orifices de sortie (11) (que deviennent alors les autres bouches de récupération(1)} où elles sont rejetées dans leur élément naturel sans aucune altération ou pollution.
En traversant le boîtier (5), les molécules entraînent le rotor (12) dont la rotation est récupérée par un axe (6). Sur cet axe se trouve fixée une poulie (7). Sur cette poulie (7) est montée une courroie (8) qui assure la jonction avec une seconde poulie (9), elle-même montée sur l'axe (13) d'une génératrice (10), transmettant le mouvement de rotation et fournissant ainsi de l'électricité.

Le dispositif selon l'invention est particulièrement destiné à la production d'une énergie propre, disponible à volonté et gratuite, pour permettre une plus grande autonomie de fonctionnement aux unités de transports terrestres ou nautiques propulsées par un moteur électrique ou aux unités nécessitant une grande réserve d'électricité pour leur utilisation courante.

## Revendications

1. Dispositif pour récupérer et exploiter les forces naturelles (courants d'air) créés lors du déplacement d'une unité de transports terrestre ou nautique (C.x) en vue de leur transformation en une énergie électrique, **caractérisé en ce qu'**il comporte un boitier compact (5) réalisé par deux panneaux entre lesquels sont compris en "sandwich" les éléments qui composent le dispositif, l'un dit "supérieur" sur lequel sont fixés lesdits éléments, à savoir les paroies (3), le rotor (12) et la génératrice de courant électrique (10), permettant ainsi une amovibilité et un transport facile, ainsi qu'une installation aisée sur l'unité de transports porteuse et son transfert d'une unité à l'autre sans difficulté, l'autre dit "inférieur" réalisé soit par le toit même de l'unité de transports porteuse, soit par un second panneau (les-dits panneaux étant assujettis aux dimensions de l'unité (ou des unités) de transports sur lequel (ou lesquels) il se doivent d'être installés).

2. Dispositif selon la revendications 1 **caractérisé en ce qu'**il comporte entre ces deux panneaux, quatre paroies (3) d'une largeur aux dimensions elles-mêmes définient par celles de la génératrice de courant électrique (10) destinée à équiper le dispositif, procurant ainsi les quatre bouches de récupération (1) des courants d'air et leur système de canalisation (2) et de centralisation (4), le tout permettant de fonctionner principalement par l'exploitation des courants d'air créés lors du déplacement de l'unité porteuse (C.x), mais également par l'exploitation des vents naturels existants en raison de phénomènes et dépressions atmosphériques classiques lorsque l'unité est immobilisée (stationnement, mouillage etc...), et cela grâce à ces quatre bouches de récupération (1) des courants d'air présentent sur chacun de ses côtés et qui deviennent, par opposition, orifice de sortie (11).

3. Dispositif selon les revendications 1, 2 **caractérisé en ce que** les paroies (3) sont fixées de façon à créer un rétrécissement qui procure une augmentation et de la force et de la vitesse des courants qui frappent alors perpendiculairement les pâles du rotor (12) monté sur un axe (6) au centre du boitier (5), avant d'être rejetés dans leur élément naturel par l'orifice de sortie (11) et cela sans altération ou pollution aucune, offrant ainsi une meilleure possibilité d'exploitation de cette force.

4. Dispositif selon les revendications qui précédent **caractérisé en ce que** la force motrice ainsi obtenue met en mouvement le rotor (12) et son axe (6) qui est, soit récupéré directement lorsque ledit axe (6) est la génératrice de courant électrique (10) elle-même, soit récupéré indirectement par une poulie (7) monté sur cet axe (6) et qui transmet le mouvement de rotation par l'intermédiaire d'une courroie (8) à une seconde poulie (9) équipant l'axe (13) de la génératrice de courant électrique (10) installée dans la périphérie immédiate du boitier (5), assurant ainsi son fonctionnement et la production d'une énergie électrique dite "embarquée" par un procédé totalement écologique.
